# EUROPEAN PATENT SPECIFICATION

(11) **EP 2 508 433 B1**
(45) Date of publication and mention of the grant of the patent: **11.05.2016**
(21) Application number: 12162035.5
(22) Date of filing: 29.03.2012
(51) Int. Cl.: B65B 35/54, B23P 19/00, B23P 19/04

(54) **Device for assembling and feeding small sized articles to a packaging machine.**
Vorrichtung zum Zusammensetzen und Zuführen von kleinen Artikeln in eine Verpackungsmaschine
Dispositif d'assemblage et d'introduction d'articles de petite taille dans une machine d'emballage

(30) Priority: 06.04.2011 IT BO20110177
(43) Date of publication of application: 10.10.2012
(73) Proprietor: AZIONARIA COSTRUZIONI MACCHINE AUTOMATICHE-A.C.M.A.-S.p.A., 40131 Bologna (IT)
(72) Inventor: Carrara, Marco, 40050 STIORE DI MONTEVEGLIO (Bologna) (IT); Melchionda, Marialivia, 40141 BOLOGNA (IT); Stivani, Eros, 40139 BOLOGNA (IT)
(74) Representative: Bianciardi, Ezio

(56) References cited:
- EP-A2- 1 048 569
- US-A- 4 470 194
- US-A1- 2003 135 978

## Description

This invention relates to a device for assembling and feeding small sized articles to a packaging machine.

More specifically, this invention relates to a device for assembling and feeding small sized articles consisting of two or more components.

In the specific case, the definition "small sized articles" has been used for identifying articles which have a small size relative to their use as will be clarified more clearly in the description below.

These articles consist, for example, of detergent tablets, comprising a first and a second component, designed to be normally positioned inside compartments provided in electrical household appliances for washing in general.

Normally, the first component is a prismatic body with a cavity at the top designed to receive a second component. In this way, the first component constitutes a base or support element for the second component which in turn constitutes an accessory component.

An apparatus is known from patent publication EP1048569 consisting of a belt conveyor feeding the first components to a support surface.

A rotary conveyor lies above the support surface and comprises a plurality of suction pushers, integral with a first chain circulating inside a guide and vertically movable by cam means, more specifically each pusher is equipped with its own cam follower roller which engages in a splined profile formed along the outer periphery of the guide. The splined profile has a stretch sloping downwards followed by a stretch sloping upwards, in such a way as to move the pushers down and away from the support surface.

Lower and upper transport elements pick up, respectively, the first components from the conveyor belt and the second components from a feed unit. The upper and lower transport elements are hinged along a second chain, in such a way that the latter move the first components forward along the support surface, whilst the upper transport elements align the second components with the cavities of the first supporting components.

The suction pushers lie above the lower and upper transport elements being aligned with the second components and the cavities of the first components. Thus, when the roller of the pushers engages in the stretch of splined profile between the two sloping stretches, the suction pushers move vertically downwards until pressing the second component inside the cavity of the first supporting component forming the finished article which is then carried to wrapping station.

In the solution described, the use of the first and second chain for transporting the pushers and, respectively, the lower and upper transport elements, results in a considerable constructional complexity.

Moreover, since the first and the second chain are subject to different tensionings, the hinges of both, over time, may loosen differently, causing a misalignment between the pushers and the lower and upper transport elements.

In other prior art solutions, for example, in patent publications EP1270455 and DE202006019187U1, a carousel, rotating relative to its vertical axis, is fed by the first and the second components carried along the respective feed means. More specifically, an inlet wheel, located upstream of the carousel, feeds the first supporting components.

Along the outer periphery of the carousel there are pairs of pick-up grippers, spaced at equal intervals, for holding the first components during rotation.

Above the pick-up grippers, the carousel comprises a disc rotating with it and equipped with a series of peripheral pockets spaced at equal intervals and shaped so as to receive the second component. The pockets of the disc are positioned so as to align the second components with the cavities of the first components.

Each pocket of the disc is surmounted by a respective suction pusher, which is also integral with the rotary carousel. Cam means move the pushers along their vertical axis, so as to press the second component in the cavity of the first component.

During rotation of the carousel, the disc continuously picks up the second components from the feed means and each pusher holds the relative component by suction.

At this point, along a predetermined, stretch of circumference travelled by the carousel, the pushers, holding the second component, move vertically downwards towards the respective first supporting component, held in turn by the pick-up grippers, and press the second component inside the cavity of the first component.

Once the second component is joined to the first component the finished article is obtained which is carried by an outlet wheel, located downstream of the carousel, towards a wrapping station.

The device described above has many mechanical components placed in rotation and synchronised with each other, such as the inlet and outlet wheels and the carousel, resulting, also in this case, in a considerable constructional complexity of the structure.

Moreover, since the production speed of the device is relatively high and the trajectory of the first supporting components consists of separate curvilinear stretches, the first components may be damaged during their transport, and therefore be rejected before being carried to the wrapping station.

Similarly to the previous case, the pushers, holding the second components, and the pick-up grippers, holding the first components, are separate mechanical components even though both are integral with the rotary carousel and, over time, any clearances may cause a misalignment of them.

The aim of this invention is to provide a device for assembling and feeding small sized articles to a packaging machine that it is simple to produce and not expensive, but without abandoning the advantages of the high production speeds.

A further aim is to provide a device which guarantees, over time, a correct reciprocal positioning of the components themselves and which limits the damage to the components during their transport.

The above mentioned purpose and aims are achieved by a device having the characteristics defined in independent claim 1.

Further features and advantages of the invention are more apparent in the non-limiting description which follows of a preferred embodiment of a device as illustrated in the accompanying drawings, in which:
- Figure 1 shows a schematic front view of the device according to this invention;
- Figure 2 shows a schematic plan view of the device according to this invention;
- Figure 3 shows a scaled-up detail from Figure 1;
- Figure 4 shows a scaled-up perspective view of a detail from Figure 1;
- Figure 5 shows a second embodiment of the device according to this invention;

The numeral 1 denotes in its entirety a device for assembling and feeding small sized articles 2 to a packaging machine.

The articles 2, as explained previously, are, for example, detergent tablets designed for inserting in special compartments of electrical household appliances for washing in general.

The articles 2 are made by the joining together of at least two components, and, according to the embodiment described, comprise a first component 3 or base component and a second component 4 or accessory component.

The first component 3 is defined the base component as it supports the second component 4 having a smaller size than the first component 3.

More specifically, the base component 3 is a substantially parallelepiped body having, on its upper surface 3a, a blind cavity 5 designed to receive the accessory component 4.

For that purpose, the inner surface of the cavity 5 is shaped in such a way as to receive the accessory component 4 so that it may be partly inserted inside it. In this case, the cavity 5 is substantially cylindrical in shape.

More specifically, the accessory component 4 consists of a cylindrical central body 4a, symmetrical relative to its axis A, and having the upper surface and the lower surface 4c convex in shape.

Preferably, inside the cavity 5 there is a layer of adhesive substance 6 so as to guarantee a firm join between the base component 3 and the accessory component 4.

In other embodiments not illustrated, the base component 3 and the accessory component 4 may be bodies with shapes as desired.

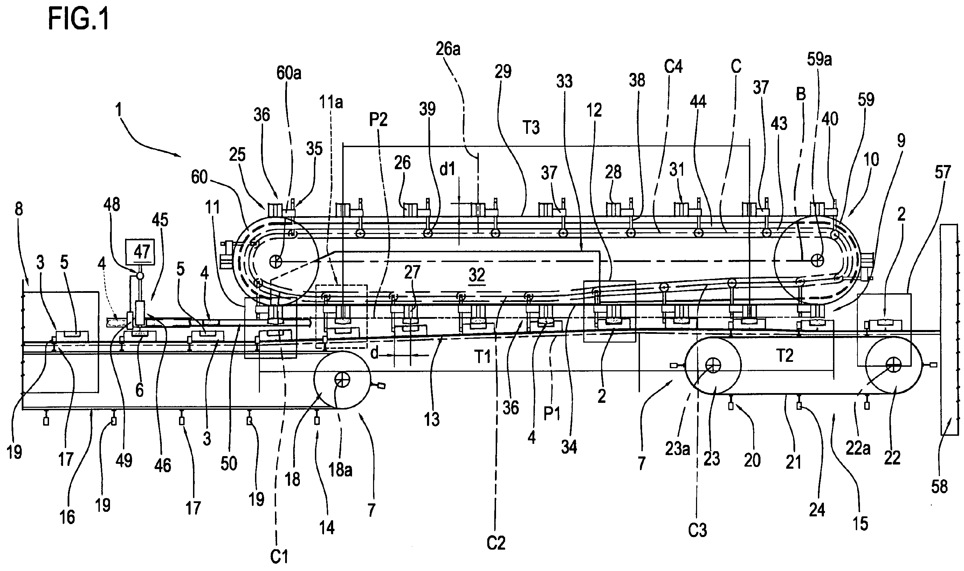

As illustrated in Figure 1, the assembling and feeding device 1 comprises at least one first conveyor 7 which is movable, for at least one stretch of it, along a first feed path P1 of the first component 3 from a first pick-up station 8 to a release station 9.

The device 1 also comprises a second conveyor 10 moving for at least one stretch of it along a second feed path P2 of the second component 4 from a second pick-up station 11 to at least one reciprocal coupling and assembly station 12.

The first and second feed paths P1, P2 have, starting from an area close to the first and the second pick-up stations 8 and 11, at least a first stretch T1 in which they converge towards the reciprocal coupling and assembly station 12 at which the finished article 2 is defined.

More specifically, the first stretch T1 extends from a zone between the first and the second pick-up stations 8 and 11. In particular, with reference to Figure 1, the zone from which the stretch T1 extends is located at the second pick-up station 11.

More specifically, the first and the second paths P1 and P2 are substantially rectilinear along the first stretch T1.

The first and second feed paths P1 and P2 have at least a second stretch T2, starting from the coupling and assembly station 12, in which they are substantially parallel and along which one of the two conveyors 7 and 10 feeds the finished article 2 forward towards the release station 9.

The first conveyor 7 comprises a support surface 13 forming the first feed path P1 and along which the first component 3 moves along the first stretch T1 of the first and second feed paths P1 and P2 and the finished article 2 moves along the second stretch T2.

In the embodiment illustrated in Figure 1, the first conveyor 7 comprises a first movement means 14 and a second movement means 15.

Between the two movement means 14 and 15 is interposed an intermediate stretch T3 of the support surface 13 along which the first components 3 are fed.

The first movement means 14 feed the first components 3 forward along the respective first feed path P1 from the first pick-up station 8 towards the reciprocal coupling and assembly station 12, whilst the second movement means 15 feed the finished articles 2 forward along the respective first feed path P1, downstream of he reciprocal coupling and assembly station 12 to the release station 9.

The first movement means 14 feed the first components 3 forward along the first feed path P1 of the first pick-up station 8 to a station 11a, intermediate between the second pick-up station 11 and the reciprocal assembly station 12 between the first and the second components 3 and 4. The station 11a is an intermediate station, at which the first component 3 is transferred from the first movement means 14 to the second conveyor 10.

The first movement means 14, positioned close to the first pick-up station 8, is fitted with a first chain 16 and first pushing means 17 distributed uniformly along it according to a predetermined spacing.

The first chain 16 is looped around a drive pulley 18, rotatable about its axis 18a, and around a driven pulley, not illustrated.

The first pushing means 17 are hinged in the known manner to the first chain 16 and comprise a first projection 19 protruding by a predetermined length above the support surface 13 for moving forward the base components 3.

The second movement means 15 is positioned downstream of the coupling station 12 and comprises, similarly to the first movement means 14, second pushing means 20 distributed according to a predetermined spacing along a second chain 21. The second chain 21 is looped around a driven pulley 22 and a drive pulley 23 rotatable about respective axes 22a and 23a.

The second pushing means 20, hinged in the known manner to the second chain 21, comprise a second projection 24 protruding by a predetermined length above the support surface 13 for moving forward the finished articles 2.

The second conveyor 10 transfers the first and second components 3 and 4 from the first to the second movement means 14 and 15 along the intermediate stretch T3 of the support surface 13.

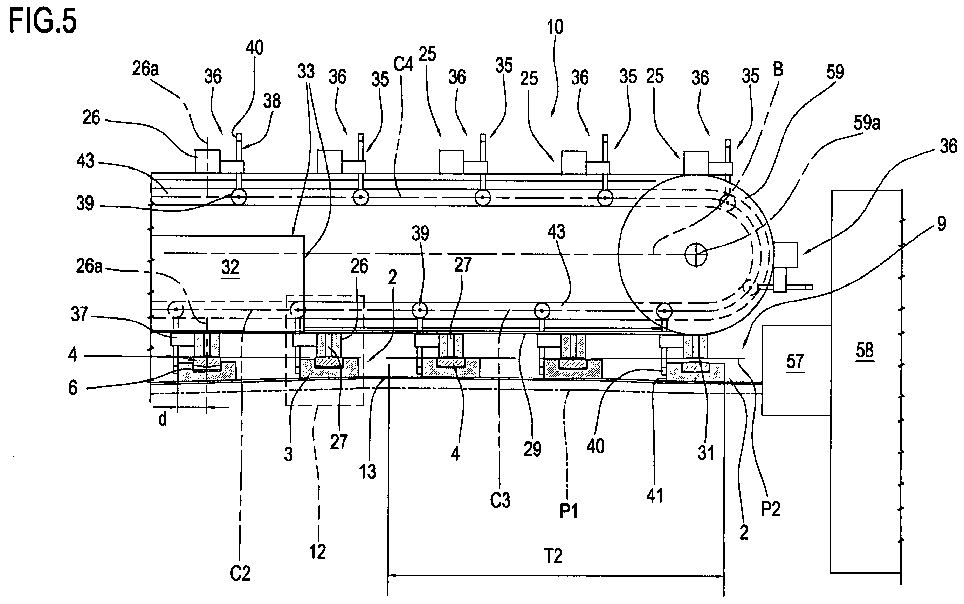

In the second embodiment illustrated in Figure 5, the second conveyor 10 moves along the first feed path P1 of the first component 3 from the second pick-up station 11 to the release station 9 and feeds the finished article 2 forward along the second stretch T2 of the first and second feed paths P1 and P2.

The second conveyor 10 comprises a drive pulley 59 and a driven pulley 60 rotatable about respective axes 59a and 60a.

The second conveyor 10 also comprises a plurality of suction means 25 distributed equidistantly along its periphery.

The suction means 25 are designed to hold the second components 4 from the second pick-up station 11 to the reciprocal coupling and assembly station 12, along the second feed path P2.

The suction means 25 consist of a cylindrical shaped aspirator 26 with axis 26a, each fitted with a through duct 27, coaxial with the axis 26a.

The duct 27 has a suction inlet 28 designed to hold the accessory component 4.

The second conveyor 10 comprises a belt 29, wound around the pulleys 59 and 60. The belt 29 is fitted with a plurality of equally spaced holes 30.

The aspirators 26 are fixed to the belt 29 in such a way that each duct 27 is coaxial with the hole 30 of the belt 29.

The aspirators 26 extend outside the belt 29 and their free end 31 is fitted with the suction inlet 28.

In the second conveyor 10, the free end 31 and the belt 29 are positioned at a reciprocal distance d1. The end 31 is concave so as to couple with the upper surface 4b of the accessory component 4.

A chamber 32, connected to means for forming the vacuum not illustrated, is defined by a plurality of fixed walls 33, whilst the conveyor belt 29 defines the lower wall 34.

The chamber 32 extends substantially from the second pick-up station 11 to the reciprocal coupling and assembly station 12.

In this way, the aspirators 26 are in fluid communication with the chamber 32 and hold the accessory component 4 by suction.

However, at the coupling station 12, the aspirators 26, since they are not in fluid communication with the chamber 32, release the accessory component 4 inside the cavity 5 of the base component 3.

The second conveyor 10 also comprises a plurality of pushing means 35 feeding the first component 3 forward along the support surface 13. Each pushing means 35 is associated with a suction means 25 forming in this way an alignment device 36.

The pushing means 35 of each alignment device 36 is positioned, along the second feed path P2, at a defined distance d from the suction means 25, the distance d defining the alignment distance of the second component 4 from the first component 3, in such a way that the second component 4 correctly enters the cavity 5 of the first component 3.

A supporting element 37 makes the aspirator 26 integral with the respective pushing means 35.

The supporting element 37 keeps the distance d fixed guaranteeing over time a correct alignment between the cavity 5 of the base component 3 and the accessory component 4 to be inserted inside it. The pushing means 35 comprise a rod 38 fitted, at its upper end, with a cam follower roller 39, and, at its lower end, with a feed bar 40.

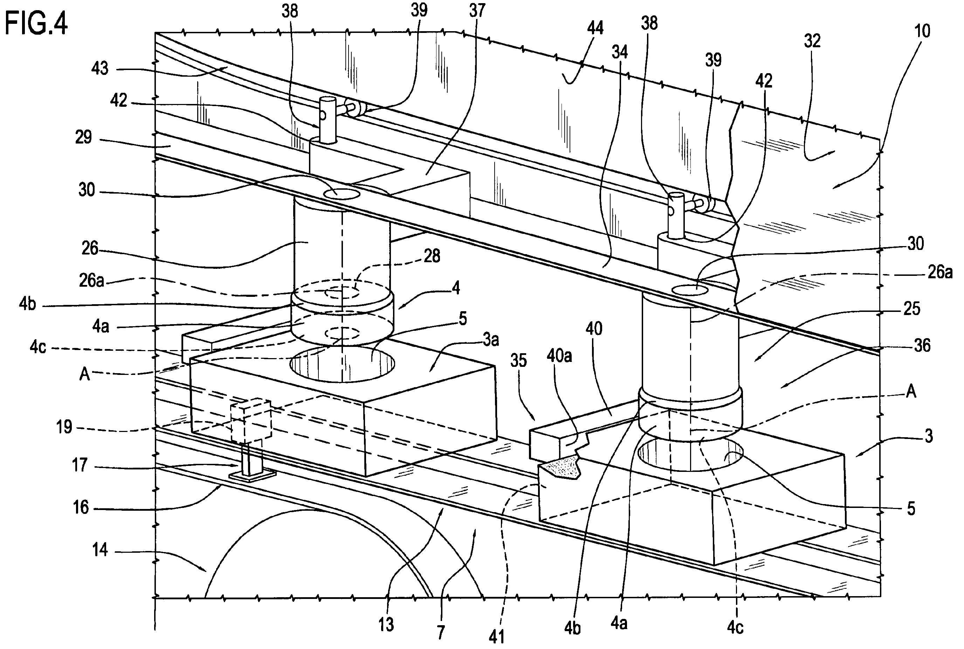

The feed bar 40 rests along the rear side wall 41, relative to the feed direction, of the first component 3 moving it forward along the support surface 13, as illustrated in Figure 4.

The distance is therefore defined along the second path P2 from the axis 26a of the aspirator 26 to the side wall 40a of the bar 40 resting along the side wall 41 of the first component 3.

The supporting element 37 is fitted with a through hole 42 inside which the rod 38 of the pushing means 35 is free to move vertically.

The rollers 39 of the pushing means 35 engage in a grooved guide 43 made in a support plate 44. The plate 44 extends along a longitudinal axis B parallel to the second conveyor 10.

The grooved guide 43 forms a movement path C of the pushing means 35 and moves the rod 38 vertically.

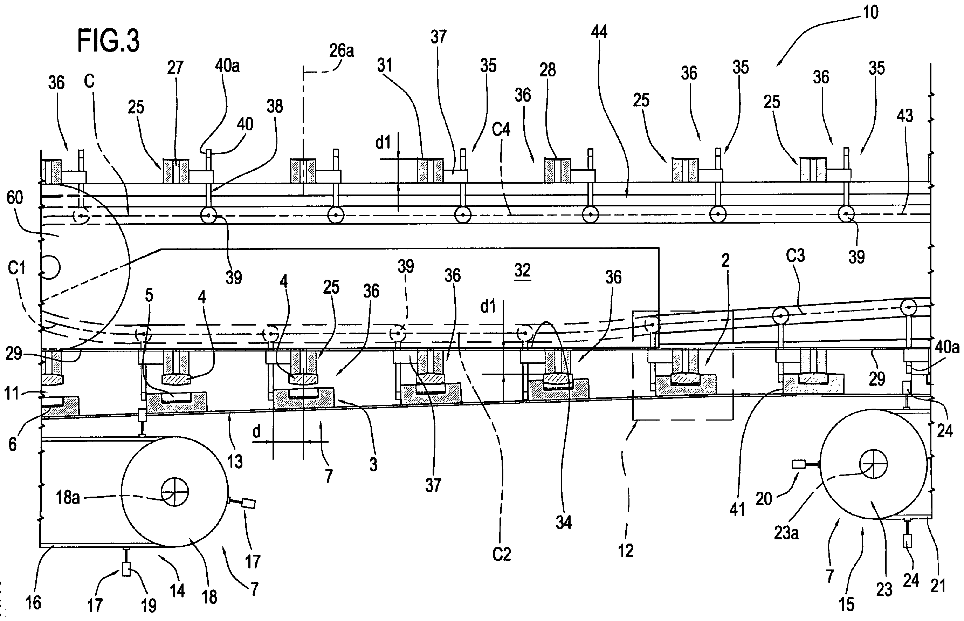

The path C is characterised by three operational stretches, indicated in Figures 1 and 3 with C1, C2 and C3, and a non-operational stretch C4.

The stretches C1, C2 and C3 are defined as operational since, along them, the pushing means 35 face the support surface 13.

On the other hand, the pushing means 35 along the stretch C4 do not face the support surface 13.

More specifically, along the operational stretch C1 the distance between the rollers 39 engaged in the guide 43 and the longitudinal axis B increases progressively.

The stretch C2, between the stretches C1 and C3, is substantially parallel to the longitudinal axis B, consequently, the distance between the rollers 39 engaged in the guide 43 and the longitudinal axis B is substantially constant.

With reference to Figure 1, along the operational stretch C3 the distance between the rollers 39 engaged in the guide 43 and the longitudinal axis B decreases progressively.

In an alternative embodiment shown in Figure 5, the operational stretch C3 is substantially parallel to the longitudinal axis B and keeps the distance between the rollers 39 engaged in the guide 43 and the longitudinal axis B constant, similarly to the operational stretch C2. Moreover, unlike the embodiment illustrated in Figure 1, the above-mentioned second movement means 15 is not fitted in this alternative embodiment.

The non-operational stretch C4 is formed by joining the final portion of the stretch C3 with the initial portion of the stretch C1.

A station 45 for applying the layer of adhesive substance 6 is located downstream of the first pick-up station 8. The station 45 comprises a nozzle 46 connected to a tank 47 containing the adhesive substance.

A pump 48 draws the adhesive substance from the tank 47 and feeds the nozzle 46.

A sensor 49 for detecting the presence of the base component 3 activates the pump 48 when the cavity 5 of the base component 3 is aligned with the nozzle 46.

In another embodiment, the pump 48 feeds the nozzle 46 periodically according to the movement interval of the base components 3.

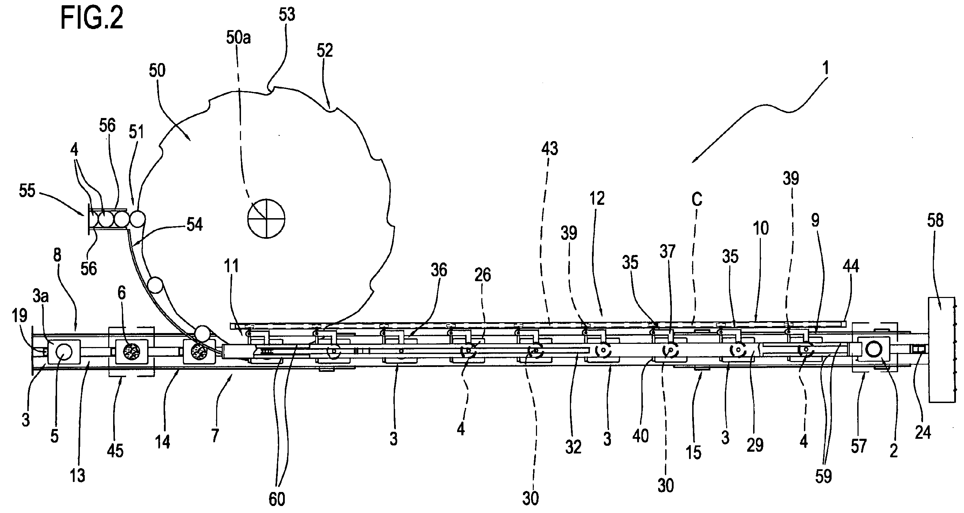

As illustrated in Figure 2, a distributor disc 50 is located upstream of the second pick-up station 11 and downstream of a feed station 51. The distributor disc 50, which rotates relative to its vertical axis 50a, is fitted with a plurality of pockets 52 located along its outer periphery and spaced at predetermined equal intervals.

The pockets 52 comprise a recess 53 shaped so as to couple with the outer surface of the accessory component 4.

From the feed station 51 to the second pick-up station 11, a side panel 54 faces the outer periphery of the disc 50.

A feeder 55, fitted with two guides 56, moves forward the accessory components 4 aligned with each other.

In use, the first protrusions 19 of the first pushing means 17 pick up the base components 3 from the first pick-up station 8 and move them forward along the support surface 13 spaced apart from each other by a predetermined interval.

The base components 3 then cross the station 45 which deposits the layer of adhesive substance 6 inside the cavity 5 of the first components 3.

Simultaneously, thanks to the shape of the recess 53, the pockets 52 of the rotary disc 50 pick up in succession the accessory components 4 from the feed station 51 and carry them continuously to the second pick-up station 11 of the second conveyor 10. The side panel 54 acts in conjunction with the disc 50 so as to hold the accessory components 4 during their transport.

At this point, at the second pick-up station 11, the aspirator 26, connected to the vacuum chamber 32, picks up in succession the accessory components 4 carried by the disc 50.

The roller 39 of the pushing means 35 associated with the aspirator 26 holding the accessory component 4 moves along the operational stretch C1 of the grooved guide 43. The rod 39 and, consequently, the bar 40 move in progression towards the support surface 13 along which the base components 3 are carried by the first pushing means 17.

The pushing means 35 of the second conveyor 10 are synchronised with the first pushing means 17 and each feeds the first component 3 along the first stretch T1 of the first and second feed paths P1 and P2.

Once the roller 39 has completed the operational stretch C1, the rod 39 is lowered in such a way that the bar 40 takes the base component 3 from the first projection 19 of the first pushing means 17 which abandons it progressively.

The base component 3 is then carried by the pushing means 35 to the reciprocal coupling and assembly station 12, whilst the roller 39 moves along the stretch C2 of the grooved guide 43.

Since the first feed path P1 is convergent with the second feed path P2 along the stretch T1, the first components 3 move progressively towards the second components 4 held by the aspirators 26.

At the reciprocal coupling and assembly station 12, the aspirator 26 releases the accessory component 4 which inserts partly inside the cavity 5 of the base component 3.

Once the accessory component 4 is joined to the base component 3 the finished article 2 has been formed.

After completing the stretch C2, the roller 39 starts to move along the stretch C3 of the guide 43, and the bar 40 connected to the rod 38 starts to move away from the support surface 13.

Since, along the stretch T2, the first feed path P1 is substantially parallel to the second feed path P2, the finished article 2 moves away in progression from the second conveyor 10.

The pushing means 35 are synchronised with the second pushing means 20 and each feeds the finished articles 2 towards the release station 9.

The rod 38 of the roller 39 which moves along the operational stretch C3 moves away from the support surface 13 in such a way that the bar 40 disengages the side panel 41 of the base component 3 and the second protrusion 24 takes the finished article 2 from the pushing means 35.

With reference to Figure 5, since the stretch C3 is substantially equivalent to the stretch C2, the bar 40 of the pushing means 35 moves the finished article 2 to the release station 9.

After completing stretch C3, the roller 39 starts to move along the non-operational stretch C4, until, following the rotation of the second conveyor 10, it starts again to engage in the operational stretch C1 of the grooved guide 43.

Downstream of the release station 9, an inspection station 57 checks the quality of the finished article 2.

Images are analysed to check that the conformity criteria of the article 2 defined by the production company are complied with. For example, it is assessed whether the accessory component 4 is present inside the cavity 5 of the base component 3 and whether the base component 3 and the accessory component 4 are damaged.

The finished articles 2 which do not comply with the conformity criteria are rejected before being packaged.

Downstream of the inspection station 57 a packaging machine 58, shown schematically, packages the articles 2.

It is evident from the previous description how the various drawbacks, highlighted in the introduction with reference to the prior art, are eliminated according to this invention.

The device 1 is relatively simple from a constructional and structural point of view, indeed, unlike the prior art, the suction means 25 are fixed relative to the second conveyor 10 and feed the second components 4, whilst the first components 3 move along the support surface 13 forming the stretch T1, along which the first components 3 move towards the second components 4 until joining and forming the finished article 2.

Moreover, since the first components 3 are gently accompanied along the support surface 13, denting or damaging of the first components 3 is avoided, considerably reducing the rejects of the finished articles 2.

Moreover, the alignment between the cavity 5 of the first component 3 and the second component 4 is guaranteed by a single device 36, unlike prior art devices. Indeed, since the pushing means 35 is integral with the aspirator 26, it is ensured that the alignment distance d between the accessory component 4 and the base component 3 is maintained fixed over time.

## Claims

1. A device for assembling and feeding small sized articles to a packaging machine, the articles (2) being defined by at least two components (3, 4) and the device comprising at least a first conveyor (7) moving for at least one stretch of it along a first path (P1) for feeding a first component (3) from a first pick-up station (8) to a release station (9), a second conveyor (10) moving for at least one stretch of it along a second path (P2) for feeding a second component (4) from a second pick-up station (11) to at least one reciprocal coupling and assembly station (12), the first and second feed paths (P1, P2) having, starting from an area close to the first and second pick-up stations (8, 11), at least a first stretch (T1) in which they converge towards the reciprocal coupling and assembly station (12) at which the finished article (2) is defined; the first and second feed paths (P1, P2) have, starting from the reciprocal coupling and assembly station (12), at least a second stretch (T2) in which they are substantially parallel and along which one of the two conveyors (7, 10) feeds the finished article (2) forward towards the release station (9);
the first conveyor (7) comprises a support surface (13) forming the first feed path (P1) and along which the first component (3) moves along the first stretch (T1) of the first and second feed paths (P1) and (P2) and the finished article (2) moves along the second stretch (T2);
the second conveyor (10) comprises a plurality of suction means (25) distributed equidistantly along its periphery;
**characterized in that**
the suction means (25) are fixed relative to the second conveyor (10) and feed the second components (4), whilst the first components (3) move along the support surface (13) forming the stretch (T1) along which the first components (3) move towards the second components (4) until joining and forming the finished article (2).

2. The device according to claim 1, **characterised in that** the first conveyor (7) comprises a support surface (13) forming the first feed path (P1) and along which the first component (3) moves along the first stretch (T1) of the first and second feed paths (P1, P2) and the finished article (2) moves along the second stretch (T2).

3. The device according to claims from 1 to 2, **characterised in that** the second conveyor (10) moves along the first feed path (P1) of the first component (3) from the second pick-up station (11) to the release station (9); the second conveyor (10) feeding the finished article (2) forward along the second stretch (T2) of the first and second feed paths (P1, P2).

4. The device according to claims from 1 to 2, **characterised in that** the first conveyor (7) comprises a first movement means (14) and a second movement means (15), there being interposed between the first two movement means (14, 15) an intermediate stretch (T3) of the support surface (13) along which the first components (3) are fed; the first movement means (14) feeding the first components (3) forward along the respective first feed path (P1) from the first pick-up station (8) towards the reciprocal coupling and assembly station (12), and the second movement means (15) feeding the finished articles (2) forward along the respective first feed path (P1) downstream of the reciprocal coupling and assembly station (12) to the release station (9).

5. The device according to claim 4, **characterised in that** the second conveyor (10) transfers the first and second components (3, 4) from the first to the second movement means (14, 15) along the intermediate stretch (T3) of the support surface.

6. The device according to any of the foregoing claims, **characterised in that** the second conveyor (10) comprises a plurality of suction means (25) distributed equidistantly along the periphery of the second conveyor (10).

7. The device according to claim 2, **characterised in that** the second conveyor (10) comprises a plurality of pushing means (35) feeding the first component (3) forward along the support surface (13), each pushing means (35) being associated with a suction means (25) and forming with the latter an alignment device (36).

8. The device according to claim 7, **characterised in that** each pushing means (35) is positioned, along the second path (P2), at a defined distance (d) from the suction means (25), the distance (d) defining the alignment distance of the second component (4) from the first component (3).

9. The device according to claim 7, **characterised in that** the pushing means (35) are synchronised with the first movement means (14) and each feeds the first component (3) forward along the first stretch (T1) of the first and second feed paths (P1, P2).

10. The device according to claim 7 or 9, **characterised in that** the pushing means (35) are synchronised with the second movement means (15) and each feeds the finished article (2) forward along the second stretch (T2) of the first and second feed paths (P1, P2).

11. The device according to claims from 7 to 10, **characterised in that** the pushing means (35) are vertically movable.

12. The device according to claim 11, **characterised in that** the pushing means (35) comprises a cam follower roller (39) engaged in a guide (43) forming a vertical movement path (C) of the pushing means (35) towards and away from the support surface (13).

## Patentansprüche

1. Vorrichtung zur Montage und zum Zuführen von kleinen Artikeln in eine Verpackungsmaschine, wobei die Artikel (2) durch mindestens zwei Komponenten (3, 4) definiert sind und die Vorrichtung mindestens eine erste Förderung (7) umfasst, die mindestens auf einem ihrem Teilstück entlang eines ersten Wegs (P1) verfährt, um eine erste Komponente (3) aus einer ersten Aufnahmestation (8) einer Freigabestation (9) zuzuführen, eine zweite Förderung (10), die mindestens auf einem ihrem Teilstück entlang eines zweiten Wegs (P2) verfährt, um eine zweite Komponente (4) aus einer zweiten Aufnahmestation (11) mindestens einer Station für die gegenseitige Kupplung und Montage (12) zuzuführen,
wobei der erste und der zweite Zuführungsweg (P1, P2) ausgehend von einem Bereich, der sich in der Nähe der ersten und zweiten Aufnahmestation (8, 11) befindet, mindestens ein erstes Teilstück (T1) aufweisen, in dem sie zur gegenseitigen Kupplungs- und Montagestation (12) zusammenlaufen, an der der fertige Artikel (2) definiert wird, wobei der erste und der zweite Zuführungsweg (P1, P2) ausgehend von der gegenseitigen Kupplungs- und Montagestation (12) mindestens ein zweites Teilstück (T2) aufweisen, in dem sie im Wesentlichen parallel verlaufen und auf dem eine der beiden Förderungen (7, 10) den fertigen Artikel (2) zur Freigabestation (9) vorschiebt, wobei die erste Förderung (7) eine Stützoberfläche (13) umfasst, die den ersten Zuführungsweg (P1) bildet und auf der sich die erste Komponente (3) entlang des ersten Teilstücks (T1) des ersten und des zweiten Zuführungswegs (P1) und (P2) bewegt und sich der fertige Artikel (2) entlang des zweiten Teilstücks (T2) bewegt;
wobei die zweite Förderung (10) eine Vielzahl an Saugmitteln (25) umfasst, die in gleichem Abstand entlang des Umfangs verteilt sind;
**dadurch gekennzeichnet, dass** die Saugmittel (25) relativ zur zweiten Förderung (10) fixiert sind und die zweiten Komponenten (4) zuführen, während sich die ersten Komponenten (3) entlang der Stützoberfläche (13) bewegen, die das Teilstück (T1) bildet, auf dem sich die ersten Komponenten (3) zu den zweiten Komponenten (4) bewegen, bis sie zusammentreffen und den fertigen Artikel (2) bilden.

2. Vorrichtung nach Anspruch 1, **dadurch gekennzeichnet, dass** die erste Förderung (7) eine Stützoberfläche (13) umfasst, die den ersten Zuführungsweg (P1) bildet und auf der sich die erste Komponente (3) entlang des ersten Teilstücks (T1) des ersten und des zweiten Zuführungswegs (P1, P2) bewegt und sich der fertige Artikel (2) entlang des zweiten Teilstücks (T2) bewegt.

3. Vorrichtung nach Anspruch 1 bis 2, **dadurch gekennzeichnet, dass** sich die zweite Förderung (10) entlang des ersten Zuführungswegs (P1) der ersten Komponente (3) von der zweiten Aufnahmestation (11) zur Freigabestation (9) bewegt, wobei die zweite Förderung (10) den fertigen Artikel (2) entlang des zweiten Teilstücks (T2) des ersten und des zweiten Zuführungswegs (P1, P2) vorschiebt.

4. Vorrichtung nach Anspruch 1 bis 2, **dadurch gekennzeichnet, dass** die erste Förderung (7) erste Bewegungsmittel (14) und zweite Bewegungsmittel (15) umfasst, wobei zwischen den ersten zwei Bewegungsmitteln (14, 15) ein Zwischenteilstück (T3) der Stützoberfläche (13) eingesetzt ist, auf dem die ersten Komponenten (3) zugeführt werden, wobei die ersten Bewegungsmittel (14) die ersten Komponenten (3) entlang des jeweiligen ersten Zuführungswegs (P1) von der ersten Aufnahmestation (8) zur gegenseitigen Kupplungs- und Montagestation (12) vorschieben und die zweiten Bewegungsmittel (15) die fertigen Artikel (2) entlang des jeweiligen ersten Zuführungswegs (P1) nach der gegenseitigen Kupplungs- und Montagestation (12) zur Freigabestation (9) vorschieben.

5. Vorrichtung nach Anspruch 4, **dadurch gekennzeichnet, dass** die zweite Förderung (10) die ersten und zweiten Komponenten (3, 4) von den ersten an die zweiten Bewegungsmittel (14, 15) entlang des Zwischenteilstücks (T3) der Stützoberfläche übergibt.

6. Vorrichtung nach einem der vorhergehenden Ansprüche, **dadurch gekennzeichnet, dass** die zweite Förderung (10) eine Vielzahl an Saugmitteln (25) umfasst, die in gleichem Abstand entlang des Umfangs der zweiten Förderung (10) verteilt sind.

7. Vorrichtung nach Anspruch 2, **dadurch gekennzeichnet, dass** die zweite Förderung (10) eine Vielzahl an Schiebermitteln (35) umfasst, die die erste Komponente (3) entlang der Stützoberfläche (13) vorschieben, wobei ein jedes Schiebermittel (35) mit einem Saugmittel (25) verbunden ist und mit diesem eine Ausrichtungsvorrichtung (36) bildet.

8. Vorrichtung nach Anspruch 7, **dadurch gekennzeichnet, dass** ein jedes Schiebermittel (35) entlang des zweiten Wegs (P2) auf einem definierten Abstand (d) von den Saugmitteln (25) positioniert ist, wobei der Abstand (d) den Ausrichtungsabstand der zweiten Komponente (4) von der ersten Komponente (3) definiert.

9. Vorrichtung nach Anspruch 7, **dadurch gekennzeichnet, dass** die Schiebermittel (35) mit den ersten Bewegungsmitteln (14) synchronisiert sind und ein jedes die erste Komponente (3) entlang des ersten Teilstücks (T1) des ersten und des zweiten Zuführungswegs (P1, P2) vorschiebt.

10. Vorrichtung nach Anspruch 7 oder 9, **dadurch gekennzeichnet, dass** die Schiebermittel (35) mit den zweiten Bewegungsmitteln (15) synchronisiert sind und ein jedes den fertigen Artikel (2) entlang des zweiten Teilstücks (T2) des ersten und des zweiten Zuführungswegs (P1, P2) vorschiebt.

11. Vorrichtung nach Anspruch 7 bis 10, **dadurch gekennzeichnet, dass** die Schiebermittel (35) vertikal bewegbar sind.

12. Vorrichtung nach Anspruch 11, **dadurch gekennzeichnet, dass** die Schiebermittel (35) eine Nockenstößelrolle (39) umfassen, die in einer Führung (43) im Eingriff ist und einen vertikalen Bewegungsweg (C) der Schiebermittel (35) hinführend zur und wegführend von der Stützoberfläche (13) bildet.

## Revendications

1. Dispositif d'assemblage et d'alimentation d'articles de petite taille dans une machine d'emballage, les articles (2) étant définis par au moins deux composants (3, 4) et le dispositif comprenant au moins un premier convoyeur (7) se déplaçant d'au moins une portion de celui-ci le long d'un premier parcours (P1) pour alimenter un premier composant (3) à partir d'un premier poste de prélèvement (8) à un poste de libération (9), un second convoyeur (10) se déplaçant d'au moins une portion de celui-ci le long d'un second parcours (P2) pour alimenter un second composant (4) à partir d'un second poste de prélèvement (11) à au moins un poste d'accouplement et d'assemblage réciproque (12), les premier et second parcours d'alimentation (P1, P2) ayant, en partant d'une zone proche des premier et second postes de prélèvement (8, 11), au moins une première portion (T1) dans laquelle ils convergent vers le poste d'accouplement et d'assemblage réciproque (12) où l'article fini (2) est défini; les premier et second parcours d'alimentation (P1, P2) possèdent, en partant du poste d'accouplement et d'assemblage réciproque (12), au moins une seconde portion (T2) dans laquelle ils sont substantiellement parallèles et le long de laquelle un des deux convoyeurs (7, 10) alimente l'article fini (2) en l'avançant vers le poste de libération (9);
le premier convoyeur (7) comprend une surface de support (13) formant le premier parcours d'alimentation (P1) et le long de laquelle le premier composant (3) se déplace le long de la première portion (T1) des premier et second parcours d'alimentation (P1) et (P2) et l'article fini (2) se déplace le long de la seconde portion (T2);
le second convoyeur (10) comprend une pluralité de moyens d'aspiration (25) répartis de façon équidistante le long de sa périphérie;
**caractérisé en ce que** les moyens d'aspiration (25) sont fixes par rapport au second convoyeur (10) et alimentent les seconds composants (4), pendant que les premiers composants (3) se déplacent le long de la surface de support (13) formant la portion (T1) le long de laquelle les premiers composants (3) se déplacent vers les seconds composants (4) jusqu'à unir et former l'article fini (2).

2. Dispositif selon la revendication 1, **caractérisé en ce que** le premier convoyeur (7) comprend une surface de support (13) formant le premier parcours d'alimentation (P1) et le long de laquelle le premier composant (3) se déplace le long de la première portion (T1) des premier et second parcours d'alimentation (P1, P2) et l'article fini (2) se déplace le long de la seconde portion (T2).

3. Dispositif selon les revendications de 1 à 2, **caractérisé en ce que** le second convoyeur (10) se déplace le long du premier parcours d'alimentation (P1) du premier composant (3) du second poste de prélèvement (11) au poste de libération (9); le second convoyeur (10) alimentant l'article fini (2) en l'avançant le long de la seconde portion (T2) des premier et second parcours d'alimentation (P1, P2).

4. Dispositif selon les revendications de 1 à 2, **caractérisé en ce que** le premier convoyeur (7) comprend un premier moyen de déplacement (14) et un second moyen de déplacement (15), une portion intermédiaire (T3) de la surface de support (13) étant interposée entre les deux premiers moyens de déplacement (14, 15) le long de laquelle les premiers composants (3) sont alimentés; le premier moyen de déplacement (14) alimentant les premiers composants (3) en les avançant le long du premier parcours d'alimentation respectif (P1) à partir du premier poste de prélèvement (8) vers le poste d'accouplement et d'assemblage réciproque (12), et le second moyen de déplacement (15) alimentant les articles finis (2) en les avançant le long du premier parcours d'alimentation respectif (P1) en aval du poste d'accouplement et d'assemblage réciproque (12) jusqu'au poste de libération (9).

5. Dispositif selon la revendication 4, **caractérisé en ce que** le second convoyeur (10) transfère les premier et second composants (3, 4) du premier au second moyen de déplacement (14, 15) le long de la portion intermédiaire (T3) de la surface de support.

6. Dispositif selon l'une quelconque des revendications précédentes, **caractérisé en ce que** le second convoyeur (10) comprend une pluralité de moyens d'aspiration (25) répartis de façon équidistante le long de la périphérie du second convoyeur (10).

7. Dispositif selon la revendication 2, **caractérisé en ce que** le second convoyeur (10) comprend une pluralité de moyens de poussée (35) alimentant le premier composant (3) en l'avançant le long de la surface de support (13), chaque moyen de poussée (35) étant associé à un moyen d'aspiration (25) et formant avec ce dernier un dispositif d'alignement (36).

8. Dispositif selon la revendication 7, **caractérisé en ce que** chaque moyen de poussée (35) est positionné, le long du second parcours (P2), à une distance définie (d) des moyens d'aspiration (25), la distance (d) définissant la distance d'alignement du second composant (4) à partir du premier composant (3).

9. Dispositif selon la revendication 7, **caractérisé en ce que** les moyens de poussée (35) sont synchronisés avec le premier moyen de déplacement (14) et chacun alimente le premier composant (3) en l'avançant le long de la première portion (T1) des premier et second parcours d'alimentation (P1, P2).

10. Dispositif selon les revendications 7 ou 9, **caractérisé en ce que** les moyens de poussée (35) sont synchronisés avec le second moyen de déplacement (15) et chacun alimente l'article fini (2) en l'avançant le long de la seconde portion (T2) des premier et second parcours d'alimentation (P1, P2).

11. Dispositif selon les revendications 7 à 10, **caractérisé en ce que** les moyens de poussée (35) sont mobiles verticalement.

12. Dispositif selon la revendication 11, **caractérisé en ce que** le moyen de poussée (35) comprend un rouleau basculeur (39) engagé dans un guide (43) formant un parcours de déplacement verticale (C) du moyen de poussée (35) qui se rapproche et s'éloigne de la surface de support (13).
